(19) Europäisches Patentamt
European Patent Office
Office européen des brevets

(11) **EP 4 783 589 A1**

(12) **EUROPEAN PATENT APPLICATION**

(43) Date of publication:
**29.07.2026 Bulletin 2026/31**

(21) Application number: **25221335.0**

(22) Date of filing: **08.12.2025**

(51) International Patent Classification (IPC):
**H04N 21/2343** *(2011.01)* **H04N 21/25** *(2011.01)*
**H04N 21/845** *(2011.01)*

(52) Cooperative Patent Classification (CPC):
**H04N 21/8456; H04N 21/23439; H04N 21/2402;
H04N 21/251; H04N 21/26258**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **28.01.2025 US 202519039679**

(71) Applicant: **Beijing YoJaJa Software
Technology Development Co., Ltd.
Beijing 100015 (CN)**

(72) Inventors:
• **Tian, Chenyu
Beijing (CN)**
• **Dai, Tongyu
Beijing (CN)**

(74) Representative: **Müller-Boré & Partner
Patentanwälte PartG mbB
Friedenheimer Brücke 21
80639 München (DE)**

(54) **CONFIGURATION SELECTION FOR CONTENT DELIVERY USING SERVER SIDE INFORMATION**

(57) In some embodiments, a method receives server side information for a request for playback of an instance of content. The server side information is determined based on features that are based on historical playback of content by a plurality of client devices. The server side information is mapped to a configuration for an adaptive bitrate algorithm. The adaptive bitrate algorithm determines a profile from a plurality of profiles based on the configuration. The configuration is compared to bitrates of profiles in the plurality of profiles to select the profile. The method sends a request for a segment of the instance of content using the profile.

FIG. 1

**Description**

## BACKGROUND

In the domain of video streaming, adaptive bitrate streaming technologies have become pivotal in ensuring a seamless and high-quality viewing experience for end-users. These technologies dynamically adjust the quality of the video stream based on the viewer's available network bandwidth and device capabilities, thereby optimizing playback performance. However, existing adaptive streaming solutions often encounter challenges in providing an optimal streaming experience. This leads to suboptimal streaming experiences characterized by buffering issues, lower-than-expected video quality, and potentially diminished user satisfaction.

## BRIEF DESCRIPTION OF THE DRAWINGS

The included drawings are for illustrative purposes and serve only to provide examples of possible structures and operations for the disclosed inventive systems, apparatus, methods, and computer program products. These drawings in no way limit any changes in form and detail that may be made by one skilled in the art without departing from the spirit and scope of the disclosed implementations.

FIG. 1 depicts a simplified system performing an adaptive bitrate algorithm that uses different logic according to some embodiments.

FIG. 2 depicts simplified flowchart for a method for selecting a bitrate according to some embodiments.

FIG. 3 depicts a more detailed example of a configuration system according to some embodiments.

FIG. 4 depicts a simplified flowchart method for training a prediction network according to some embodiments.

FIG. 5 depicts a simplified flowchart of a process for predicting the server side information according to some embodiments.

FIG. 6 depicts a simplified flowchart of a method for determining the configuration according to some embodiments.

FIG. 7 depicts a video streaming system in communication with multiple client devices via one or more communication networks according to one embodiment.

FIG. 8 depicts a diagrammatic view of an apparatus for viewing video content and supplemental content.

## DETAILED DESCRIPTION

Described herein are techniques for a content delivery system. In the following description, for purposes of explanation, numerous examples and specific details are set forth to provide a thorough understanding of some embodiments. In some embodiments as defined by the claims may include some or all the features in these examples alone or in combination with other features described below, and may further include modifications and equivalents of the features and concepts described herein.

System Overview

During a playback session, an adaptive bitrate algorithm of a client device may determine a profile level to select based on available bitrate in a playback session. The adaptive bitrate algorithm may determine the available bitrate, and select a profile based on bitrate. For example, the profile that is associated with a bitrate that is closest to the available bitrate may be selected. At times, such as for the initial segment of content, the adaptive bitrate algorithm may use first logic to select a profile that may not consider the available bandwidth for the current playback session, such as because this is the first segment of the playback session and there is no available bandwidth in the current playback session for the adaptive bitrate algorithm to consider. In some examples, the first logic may select a first profile in a list of profiles that is received from a content delivery network. The first profile may be associated with a first bitrate. In some cases, the first profile may not be the optimal profile to use. For example, the first bitrate may be higher than the current available bandwidth that is experienced when downloading the initial segment, which may result in slower download times and a slower startup time for playback.

To improve the playback, the adaptive bitrate algorithm may use second logic to select an initial configuration instead of the first logic. The client device may receive server side information that is used to select the initial configuration. The server side information may be a prediction of the network conditions that is based on historical playback information from a set of client devices. The server side information may be referred to as a health factor. Also, the second logic may use client side historical information that is stored on local storage to determine the initial configuration. In some embodiments, the initial configuration specifies a bitrate that is used to select a profile. Also, the initial configuration may include selecting a safety factor, buffer level target, profile, or other settings. The safety factor may be a multiplier applied to the estimated bandwidth. Values less than the value of "1" lead to more conservative bitrate selection. The buffer level target represents the ideal buffer size that the client device aims to maintain for smooth playback without rebuffering.

In some embodiments, the adaptive bitrate algorithm uses the above server side information and optionally the client side information to select a bitrate, which may be a target start bitrate. The target start bitrate is used to select a profile to start the playback of a requested instance of content. The profile that is selected may improve the playback experience. For example, if the server side information or the client side information indicates that bandwidth may be lower in previous playback sessions, the adaptive bitrate algorithm may determine that the bitrate is 500 Kbps (Kilobits per second). However, the first profile may be associated with a bitrate of 2400 Kbps. The adaptive bitrate algorithm may select the profile with a bitrate of 400 Kbps. The use of the profile with 400 Kbps may improve the download process of the first segment and start playback faster. In other examples, if more bandwidth is available, a profile with a higher bitrate may be selected to more efficiently use available bandwidth, such as a profile with 3000 Kbps is selected if the bandwidth is 3500 Kbps. Other settings may also be selected, such as the safety factor or buffer level target. For example, if the bitrate is lower, then the safety factor may be set to a lower value compared to being set to a higher value if the bitrate is higher. Also, the buffer level target may be set to a higher value if the bitrate is lower and set to a lower value if the bitrate is higher.

<u>System</u>

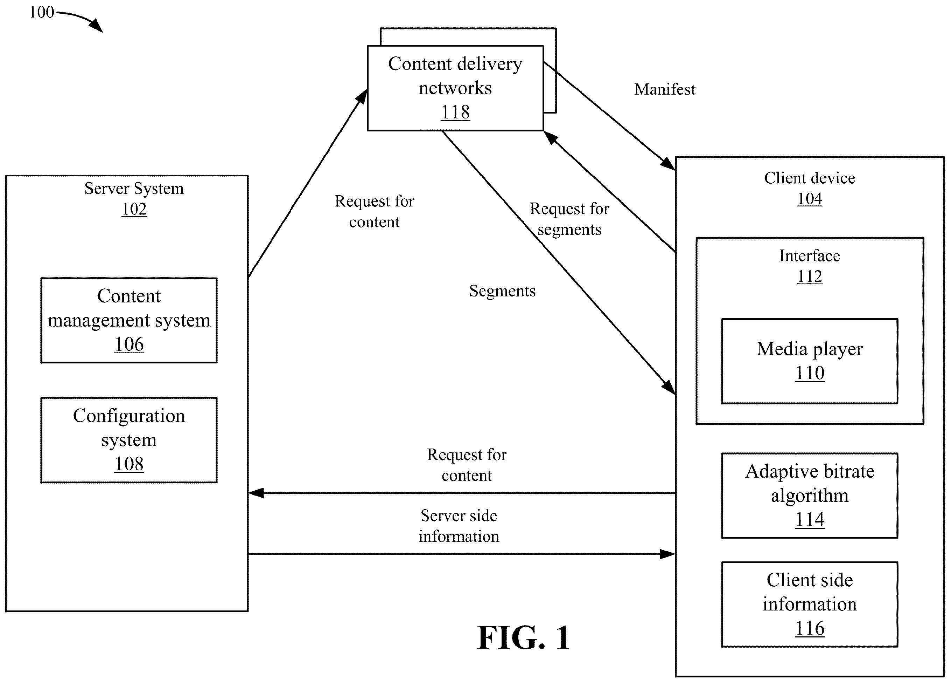

FIG. 1 depicts a simplified system 100 performing an adaptive bitrate algorithm that uses different logic according to some embodiments. System 100 includes a server system 102 and a client device 104. Although single instances of server system 102 and client device 104 are shown, multiple instances of server system 102 and client device 104 may be appreciated. For example, multiple client devices 104 may be requesting content from a single server system 102 or multiple server systems 102.

Server system 102 includes a content management system 106 that may facilitate the delivery of content to client device 104. For example, content management system 106 may communicate with multiple content delivery networks 118 (also referred to as a content delivery network 118) to have content delivered to multiple client devices 104. A content delivery network 118 includes servers that can deliver content to client device 104. The content may be video, audio, or other types of content. Video may be used for discussion purposes, but other types of content may be used in place of video. In some embodiments, content delivery network 118 delivers segments of video to client device 104. The segments may be a portion of the video, such as six seconds of the video. A video may be encoded in multiple profile levels that correspond to different levels, which may be different levels of bitrates or quality (e.g., resolution). Client device 104 may request a segment of video from one of the profile levels based on current network conditions. For example, client device 104 may use an adaptive bitrate algorithm to select the profile level for the video based on the estimated current available bandwidth and other network conditions.

Client device 104 may include a mobile phone, smartphone, set top box, television, living room device, tablet device, or other computing device. Client device 104 may include a media player 110 that is displayed on an interface 112. Media player 110 or client device 104 may request content from the content delivery network 118.

A profile ladder may be provided to client device 104 for segments that can be requested in a manifest. A manifest may be a playlist or media presentation description that lists information for segments that can be requested. The information may include a profile ladder. The profile ladder may list different profile levels for each segment. The profile levels may be associated with different bitrates, quality, or both, and other information such as segment duration, encoder type, etc. The different bitrates, quality, or both may have been used to encode each segment of the video to create multiple profiles for each segment. An adaptive bitrate algorithm 114 may determine which profile level to select for each segment. Client device 104 can send requests for segments that are associated with a profile level. For example, client device 104 may use identifying information for a profile level to request a segment. Content delivery network 118 may then send the segment of video for the requested profile level to client device 104, which can then display the segment in media player 110 on interface 112. Client device 104 may change the profile levels that are requested for segments based on current network conditions.

A configuration system 108 may provide server side information to client device 104. Configuration system 108 predicts network conditions and provides server side information to client device 104 for adaptive bitrate algorithm 114 to select a configuration, such as the initial configuration. When a playback session starts, media player 110 sends a request to content management system 106 for an instance of content. Client device 104 receives the server side information, which may be a prediction of network conditions (referred to as a health factor). Then, adaptive bitrate algorithm 114 selects a configuration based on the server side information to start the playback of the instance of content. Adaptive bitrate algorithm 114 may also use client side information at 116, if available. The client side information may be based on historical information from client device 104. For example, adaptive bitrate algorithm 114 may combine the server side information and the client side information to determine the configuration. Also, adaptive bitrate algorithm 114 may only use the server side information to determine the configuration. Different settings for the configuration will be discussed below.

Configuration system 108 includes a prediction network to predict the server side information for requests, where a model for the prediction network may be trained and uploaded to configuration system 108. The server side information may be referred to as a health factor, which is a value that quantifies the network conditions that are predicted for the request. For example, a higher health factor may represent better network conditions are predicted and a lower health factor may represent worse network conditions are predicted.

The use of the server side information may improve the operation of adaptive bitrate algorithm 114. For example, if the first logic selects a first profile by default, such as a profile at 2400K Mbps, but the available bandwidth is only 800K Mbps, client device 104 may experience slow download times because the available bandwidth is less than the bitrate of the profile. Using the second logic, adaptive bitrate algorithm 114 may determine that the bandwidth may be lower based on the server side information or the client side information, and a profile around 400K Mbps should be requested. Adaptive bitrate algorithm 114 may select the profile with a bitrate of 400K Mbps, and segments for this profile may be downloaded without experiencing quality of service problems, such as rebuffers, which improves the playback process.

Adaptive bitrate algorithm 114 may use the server side information or client side information 116 to improve its selection a configuration, such as a selection of a bitrate that is used to select a profile or a selection of a profile. When adaptive bitrate algorithm 114 is determining a bitrate, such as the initial bitrate to be used to request a profile in a playback session, adaptive bitrate algorithm 114 may select the bitrate using different sets of logic. For example, first logic may be default logic that may select a bitrate that is used to select a profile. In some embodiments, this results in selecting a first profile that is listed in the manifest. In other embodiments, the first logic may use fixed settings or information that are not changed across instances of content that are being played back in different playback sessions. In contrast, adaptive bitrate algorithm 114 may also use second logic that may leverage the server side information or the client side information to select the bitrate. The second logic may adjust the bitrate that is determined based on the values of the server side information or the client side information.

The following will discuss an example where server side information is used for initial profile selection. Although the selection of the initial profile discussed, the following may be used to determine a bitrate at different times, such as after the initial profile selection, to select a profile for another segment of the content. The use of server side information or client side information may improve the profile that is determined to select a segment. Also, the server side information or the client side information may be used to select a bitrate for other applications. For example, the bitrate may be used to adjust parameters for the adaptive bitrate algorithm, such as the parameters may be adjusted in the adaptive bitrate algorithm throughout a playback session based on the server side information or the client side information. The parameters may be settings that are used to determine the profile to select, such as a safe factor that applies an adjustment to the determined bitrate or a target buffer level. Also, the selection of a content delivery network, or switching between content delivery networks, may use the server side information or the client side information to determine a content delivery network.

The following will now discuss the determination of the bitrate in more detail.

Bitrate Selection

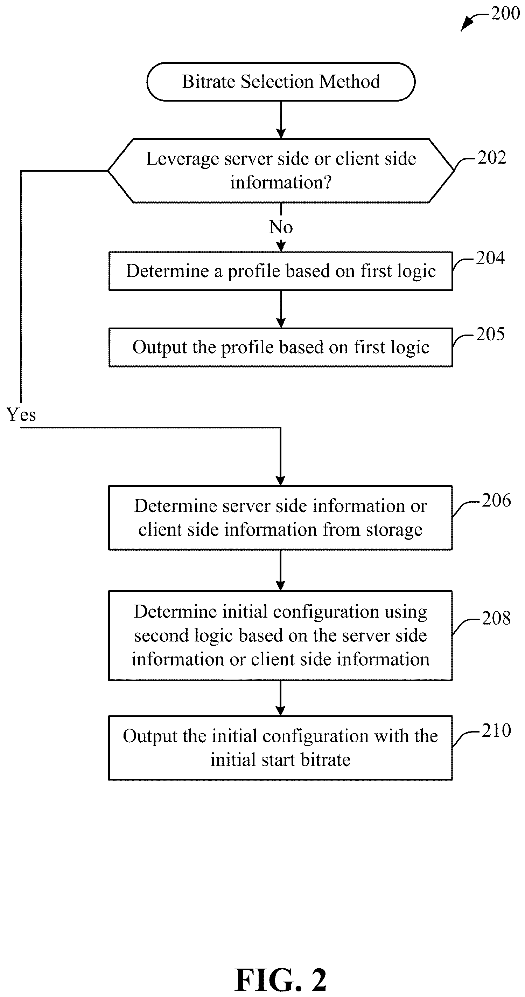

FIG. 2 depicts simplified flowchart 200 for a method for selecting a bitrate according to some embodiments. At 202, adaptive bitrate algorithm 114 determines whether to leverage server side information or client side information. When server side information or client side information is discussed, server side information, client side information, or server side information and client side information may be used. The determination on whether to leverage server side information or client side information may be based on different processes. For example, configuration system 108 may provide a setting to client device 104 that is used to determine whether to leverage the server side information or the client side information, such as a flag that is set when server side information or client side information should be used. Also, client device 104 may analyze the server side information or the client side information to determine whether to leverage server side information or client side information based on a context of the server side information or the client side information. For example, client device 104 may determine if client side information has expired or not as the context. Also, server side information may not be received or client device 104 may not have local storage to store client side information.

If server side information or client side information is not going to be used, at 204, adaptive bitrate algorithm 114 determines a profile based on first logic. As discussed above, the first logic may use logic that is fixed, such as logic that always selects a profile that is listed first in a listing of the profiles. That is, client device 104 may receive a manifest from content delivery network 118 that includes information to request segments of content. The manifest may list profiles in an order. Adaptive bitrate algorithm 114 may select a bitrate from the first profile that is listed. In other embodiments, adaptive bitrate algorithm 114 may use fixed settings to determine a bitrate, such as by calculating a bitrate based on its configuration settings. The first logic may not consider any server side information or client side information. At 205, adaptive bitrate algorithm 114 outputs the determined profile. The first logic may also make other determinations, such as determining the first bitrate associated with the first profile in the list.

If server side information or client side information is to be leveraged, at 206, adaptive bitrate algorithm 114 determines the server side information or the client side information. The server side information may be received from server system 102 and the client side information may be retrieved from local storage at client device 104.

At 208, adaptive bitrate algorithm 114 determines an initial configuration, such as a bitrate, using second logic based on the server side information or the client side information. The second logic may determine different values for the configuration, such as a bitrate, based on different values of the server side information or the client side information. This may adapt the configuration based on network conditions that have been experienced. The determined configuration may be more optimal based on the network conditions that have been experienced by client device 104 or other client devices. The use of the second logic will be described in more detail below.

At 210, adaptive bitrate algorithm 114 outputs the initial configuration with the initial start bitrate. In this case, adaptive bitrate algorithm 114 uses a bitrate that is determined by the second logic to select a profile. Depending on which of the first logic or the second logic is used, this may result in different profiles that could be selected.

Configuration system 108 will now be described in more detail.

Configuration System

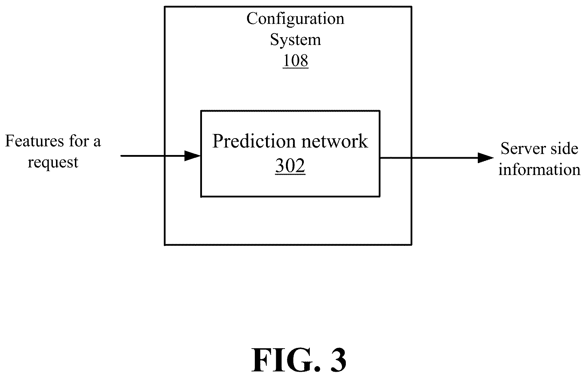

FIG. 3 depicts a more detailed example of configuration system 108 according to some embodiments. Configuration system 108 includes a prediction network 302 that is configured to receive features for a request and output server side information. Prediction network 302 may include a model that is trained to map features for a request to server side information.

In some embodiments, the model is trained to output server side information, which is includes a health factor, based on the features that are input. The health factor may represent the network conditions based on historical information for playback of instances of content. In some embodiments, the value for the health factor may be a value from a range, such as 0 to 1, where a value closer to "0" represents poor network conditions and a value closer to "1" represents good network conditions. Poor network conditions may be associated with video startup times that are longer, connection induced rebuffering is more likely to be experienced, or available bandwidth is lower. Good network conditions may be associated with higher available bandwidth, shorter video startup times, or less connection induced rebuffering.

The model may be implemented using neural networks configured with parameters (e.g., weights), which may be adjusted based on training. Based on the values of the parameters, prediction network 302 is trained to map features to server side information. The following will now discuss the training of prediction network 302 in more detail.

Training

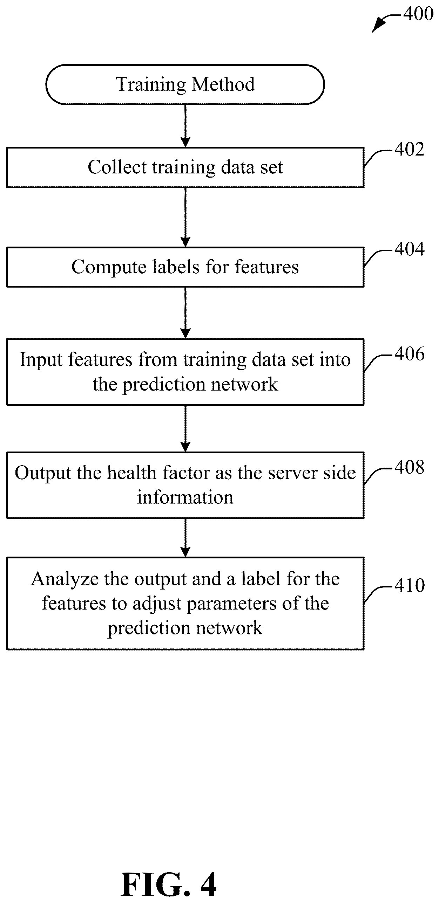

FIG. 4 depicts a simplified flowchart 400 method for training prediction network 302 according to some embodiments. At 402, configuration system 108 collects a training data set. Configuration system 108 may collect historical playback data from multiple client devices. When a playback session ends, information for the playback session may be received, such as the location and client device associated with the playback session, along with playback data from the delivery of the instance of content for the playback session. The playback data may be received from the client device, such as from media player 110. Also, a content delivery network 118 that delivered the instance of content may also provide the playback data.

In some embodiments, the playback data may include the features of geographic location, network location, device information, content information, and other information. In some embodiments, the features in Table 1 may be used, but these features are not limited to being used.

Table 1

| Feature | Description |
|---|---|
| Device platform | The player device platform for the current session. |
| Country | The country where the client is located. |
| City | The city where the client is located. |
| Network type | The kind of current network of the device, e.g., 'Wi-Fi', '5G', etc. |
| Internet Service Providers (ISP) | The organization that provides Internet services. |

(continued)

| Feature | Description |
| --- | --- |
| Content Delivery Network (CDN) | The endpoint of the Content Delivery Network that provides content to download. |
| Video codec | The video codec of video requested. |
| Audio codec | The audio codec of video requested. |

Other features may be quality of service (QoS), features. The quality of service features may be collected after the playback session ends and represent the streaming experience for the playback session. Table 2 describes QoS features that may also be collected, but other features may be used.

Table 2

| QoS | Description |
| --- | --- |
| Throughput | The average throughput of downloading content over the playback, measured in Megabits per second (Mbps). |
| Video Startup Time (VST) | The duration between a selection of the start button and the media player being ready to play the first segment of the video, measured in seconds. |
| Connection induced rebuffering ratio (CIRR) | The percentage of rebuffering time induced by network connection over the playback time. |

The throughput may be the average throughput of downloading content over the playback session and is measured in units, such as Megabits per second (Mbps). The video startup time may be the duration between receiving a selection to start the instance of content and media player 110 being ready to play a first segment of the instance of content, which may be measured in units, such as seconds. The connection induced rebuffering ratio may be the percentage of rebuffering time induced by the network connection over the playback time. The rebuffers may be measured in different ways, such as by a number of rebuffers per playbacks.

At 404, configuration system 108 computes labels for features in the training dataset. For example, groups of features may be determined and the respective label is computed for the respective groups of features. There may be different methods that may be used to calculate the label. One way to train prediction network 302 is using throughput as a label to adjust parameters in the model. Then, the model can learn a mapping from the features to throughput and a prediction of throughput can be used to represent the network conditions. For example, the features may be mapped to a value of throughput. The label may be the actual value of throughput for the features of the playback session. Then, the model is trained by adjusting the parameters based on a difference between the label and a predicted value for the throughput such that the difference is minimized. However, only using throughput may not robustly represent the network conditions, and only represents one measurement. For example, playback sessions with high throughput might also encounter issues such as rebuffering and long video startup times due to network fluctuations. If only the throughput feature is used for the model training, the trained model would only be aware of bandwidth, but not network fluctuations.

To overcome the above limitation, configuration system 108 uses a label referred to as a health factor to predict the server side information. The throughput feature may be used in the prediction of the health factor, but other features may be used, such as video startup time and connection induced rebuffering ratio. In some examples, a low startup bitrate for a faster video startup time may be used when there is a high possibility of a longer video startup time. That is, the model of prediction network 302 may be trained to output a lower, more conservative, scores for the health factor when it is predicted that a playback session may experience a longer video startup time. The lower score for the health factor may cause media player 110 to select a lower startup bitrate. Also, to train the model to be aware of longer video startup times, the label for the health factor may be decreased if video startup time meets (e.g., is beyond) a threshold. This may cause parameters of the model to be adjusted to predict a lower health factor. For connection induced rebuffer ratio, a conservative configuration of adaptive bitrate algorithm 114 may be used when there is a high possibility of a rebuffer. Here, the label for health factor may be decreased if the connection induced rebuffer ratio meets (e.g., is above) a threshold. Then, the parameters of the model may be adjusted to predict a lower score for the health factor. By training the model for throughput, video startup time, or connection induced rebuffer ratio, the model generates a health factor that takes both network fluctuations and bandwidth into consideration. Other types of training may also be performed.

In some embodiments, the following may be used to determine the label. Configuration system 108 may set hyper parameter values, such as a decay parameter set to 0.5, a buffer threshold set to 0.04, a video startup time threshold is set to 10, and a max throughput threshold is set to 300. Other values may also be appreciated. Then, configuration system calculates a health factor using the bandwidth, such as using $health\_factor = min(throughput/max\_throughput, 1)$, where health_factor is the health factor, min is a minimum, throughput is the throughput, and max_throughput is the maximum throughput. Here, the health factor will be the minimum of throughput/maximum throughput or the value of "1". Then, configuration system 108 determines if the connection induced rebuffer ratio meets (e.g., is greater) than a rebuffer threshold cirr_threshold. If so, configuration system 108 sets the health factor to the health factor calculated by the bandwidth times the decay value, such as using health_factor = *health_factor * decay.* Here, the health factor may be reduced by the decay value, which is set at 0.5. Also, if the video startup time meets (e.g., is greater than) the video startup time threshold long_vst_threshold, configuration system 108 sets the health factor calculated by the bandwidth to the health factor times the decay value, such as using health_factor = health_factor *\* decay.* Here, the health factor may be reduced by the decay value, which is set at 0.5. Table 3 summarizes the calculation of the health factor for the label. Although this method of calculating the health factor label is described, other methods of calculating the label may be appreciated.

Table 3

| Calculating the health factor |
| --- |
| 0: Set hyper-parameters: <br> *decay* = 0.5, *cirr_threshold* = 0.04, *long_vst_threshold* = 10, max_*throughput* = 300 <br> 1: calculate by bandwidth <br> $\qquad$ *health_factor* = min (*throughput*/ max_throughput, 1) <br> 2: If CIRR > cirr_threshold: <br> $\qquad$ *health_factor = health_factor * decay* <br> 3. If VST > long _vst_threshold: <br> $\qquad$ *health_factor = health_factor * decay* |

At 406, configuration system 108 inputs features from the training dataset into prediction network 302. Prediction network 302 then maps the features to a predicted score for the health factor. At 408, prediction network 302 outputs the health factor as the server side information.

A 410, configuration system 108 analyzes the output and a label for the features to adjust parameters of prediction network 302. Different methods for adjusting the parameters may be used. For example, regression may be used to adjust the parameters to minimize a difference between the output and the label. Accordingly, the training may learn the optimal model weights based on comparing the difference between the output and the label for the features. The model parameters (e.g., weights) may be adjusted such that the output may be closer to the label.

After training, the adjusted parameters may be uploaded and used in the model for prediction network 302. Because the network conditions may vary over time, the model may be trained with updated data periodically, such as every hour, day, week, etc. This provides more accurate predictions and a better streaming experience for delivering content to client devices 104.

After training, configuration system 108 may be used to predict the server side information.

Server Side Prediction

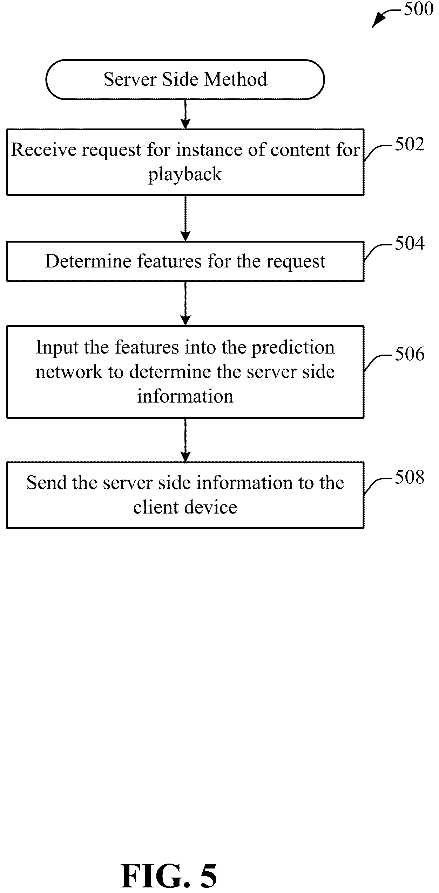

FIG. 5 depicts a simplified flowchart 500 of a process for predicting the server side information according to some embodiments. At 502, server system 102 receives a request for an instance of content for playback. For example, client device 104 may send a request for playback of the instance of content to content management system 106. For example, a start playback button may be selected to start the playback.

At 504, configuration system 108 determines features for the request. For example, the features for the request may be based on client device 104, an account associated with a user that requested the playback, or other information. The features described above in table 1 and table 2 may be determined.

At 506, configuration system 108 inputs the features into prediction network 302, which maps the features to the server side information based on the parameters of the model. For example, prediction model 302 maps the features to a score for the health factor. At 508, server system 102 sends the server side information to the client device 104.

Client Side

After receiving the server side information, adaptive bitrate algorithm 114 of client device 104 may select a configuration for playback, such as an initial configuration for starting playback of the instance of content that was requested. The configuration may include, but is not limited to, configuration parameters of a start bitrate, a safety factor, a buffer target level, or any combination thereof. The start bitrate may be the initial bitrate to use to select a profile. The safety factor may be a multiplier applied to the health factor. In some embodiments, values less than one lead to a more conservative bitrate selection. The buffer target level may represent an ideal buffer size that is a goal to maintain for smooth playback. The start bitrate may be determined before playback of the instance of content starts, but the start bitrate may be determined at any point during the playback of the instance of content. Then, the start bitrate may be used to select a profile after the playback started.

The configuration parameters may all control the conservativeness or the aggressiveness of adaptive bitrate algorithm 114, and are adjusted based on the health factor that is predicted. For example, parameters that are more conservative may request a profile with a lower bitrate. Meanwhile, parameters that are more aggressive, may request a profile with a higher bitrate. The values for the parameters may be selected based on the health factor, but not all parameters may be selected using the health factor. Also, other parameters in the configuration may also use the health factor to select respective values.

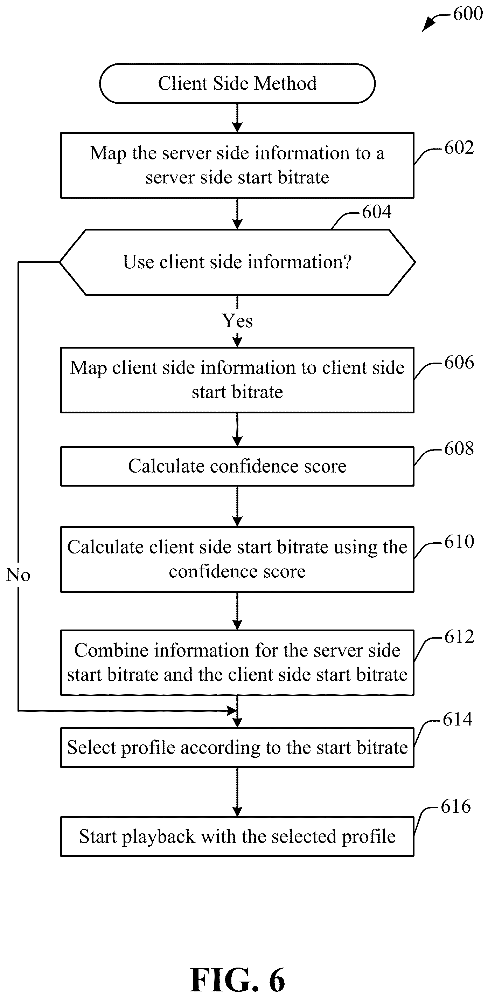

FIG. 6 depicts a simplified flowchart 600 of a method for determining the configuration according to some embodiments. The following describes how to determine the start bitrate. This process may also be applied to determine the values for the other parameters. At 602, adaptive bitrate algorithm 114 maps the server side information to a server side start bitrate. In some embodiments, the prediction of the health factor value may be a continuous value ranging from 0 to 1. The health factor value may map to a target start bitrate. In some embodiments, a linear mapping may be applied, which converts the value of the health factor to a start bitrate where the value of the health factor is multiplied by the safe factor. The following may be used to determine the target start bitrate of *target start bitrate = health_factor * safe_factor*. In some embodiments the health factor and safe factor may map to target start bitrates from 0 to 15 Mbps, but other values may be used. Using this target start bitrate, the playback sessions that are predicted to have poor network conditions will use lower start bitrates compared to playback sessions that are predicted to have good network conditions, which may have a higher target start bitrate. The lower the value for the safe factor will reduce the start bitrate to make the playback more safe (e.g., there is less chance of rebuffers or a long video start up time). Then, the video startup time is faster, but the video quality is lower because a profile with a lower quality may be selected. Accordingly, the lower the value for the health factor or safe factor maps to a lower start bitrate. However, a higher safe factor may lead to a higher start bitrate, which in turn is used to select a profile with a higher bitrate. The higher start bitrate then contributes to a higher video startup time, but a higher quality video. The safe factor may be used to balance between the video startup time and the video quality.

Adaptive bitrate algorithm 114 may select a profile using the target start bitrate by choosing the profile with the closest bitrate or selecting the profile with the largest bitrate that is below the target start bitrate. In the following example, adaptive bitrate algorithm 114 converts the health factor value (e.g., health_factor) to the target start bitrate and controls the conservativeness by the safe factor value (e.g., safe_factor). If there are three playback sessions on three client devices with different predictions of the health factor health_factor. The values in the following table 4 represent the health factor scores of 0.1, 0.5, and 0.9 for the three sessions.

Table 4

| Session 1 | Session 2 | Session 3 |
|-----------|-----------|-----------|
| 0.1 | 0.5 | 0.9 |

The safe factor is set on all client devices as a hyper-parameter, and all client devices share the same value for discussion purposes, but could have different values. The following table 5 shows the target start bitrate under different values of the safe factor, where the values represent the target start bitrate for the sessions.

Table 5

| | Session 1 | Session 2 | Session 3 |
|--------------|-----------|-----------|-----------|
| safe factor=5 | 0.5 Mbps | 2.5 Mbps | 4.5 Mbps |
| safe factor=10 | 1.0 Mbps | 5.0 Mbps | 9.0 Mbps |
| safe factor=15 | 1.5 Mbps | 7.5 Mbps | 13.5 Mbps |

A higher safe factor leads to a higher start bitrate. For example, the safe factor of 15 has higher start bitrates of 1.5 Mbps, 7.5 Mbps, and 13.5 Mbps than the lower safe factors of 5 and 10 for the respective session. Client devices experience higher video quality but also a face a higher risk of longer start-up time. Client devices can set the safe factor to any value according to preference between quality and start-up time.

At 604, adaptive bitrate algorithm 114 determines whether to use client side information. In some embodiments, client device 104 may determine whether to use client side information if this client device has local storage to store client side information. For example, client device 104 may store client side information as local information about the historical playback sessions it has experienced. In other embodiments, client device 104 may determine whether to use client side information when a flag is set that indicates the client side information should be used. Also, configuration system 108 may send an indication that client side information should be used or not used. If client device 104 does not have local storage of client side information, then client device 104 does not use the client side information.

The client side information may be used to improve the prediction from the server side information. For example, the client side information may be used to refine the target start bitrate when it is available. However, in some embodiments, client device 104 may decide not to use the client side information. Also, client device 104 may not have access to local storage that can store the client side information, and thus the option to use client side information is not available. Having access to the server side information may be an improvement over not having access to any information to guide the selection of the target start bitrate.

The use of the server side information and the client side information may provide different advantages. The server side information may be device independent and available for all devices even if those client devices do not have any historical playback information associated with them. This is because the server side information may aggregate historical playback information from multiple client devices, and then use the server side information for any client device that requests an instance of content. The client side information provides a device level prediction, which may be more accurate and stable for that specific client device because the client side information is from conditions experienced by the client device. However, the accuracy may degrade in some scenarios, such as when the time gap since the last playback session is longer and when there is a high variance between the playback sessions. For example, the time gap may be above a threshold. Also, there may be high variance on some types of client devices, such as where users may watch videos on mobile devices in different locations with vastly different network conditions.

The following process may leverage the different aspects of the server side information and the client side information. In general, adaptive bitrate algorithm 114 may calculate a confidence score that represents how much confidence there is in the client side information, and then combine the server side information and the client side information according to the confidence score.

In the process, at 606, adaptive bitrate algorithm 114, when using the client side information maps the client side information to a client side start bitrate. In some embodiments, the mapping may be similar to the mapping using the health factor, but this mapping may use the safe factor. For example, the value of the safe factor maps to a value of the start bitrate using a linear mapping. Other historical information may also be used to determine the start bitrate. For example, historical bandwidth may be mapped to a start bitrate. Additional details of determining a target start bitrate using the client side information may be described in U.S. Application No. 18/435,925 entitled "BITRATE SELECTION USING STORED INFORMATION", filed February 7, 2024, which is incorporated by reference for all purposes.

Then, at 608, adaptive bitrate algorithm 114 calculates a confidence score that represents how much confidence there is in the client side information. The confidence score may be based on the time gap time_gap and variance std. As discussed above, there may be some scenarios where the client side information may not be considered as accurate, such as when the time gap is above a threshold or when the variance between the historical playback sessions on one device is above a threshold. In some embodiments, the following may be used to determine the confidence score, but other methods may be used.

$$confidence\_time\_gap = \begin{cases} 1 & if\ time\_gap < \min\_time\_gap \\ 0 & if\ time\_gap > \max\_time\_gap \\ \dfrac{\max\_time\_gap - time\_gap}{\max\_time\_gap - \min\_time\_gap} & otherwise \end{cases}$$

$$confidence\_fluctuation = \begin{cases} 1 & if\ std < \min\_std \\ 0 & if\ std > \max\_std \\ \dfrac{\max\_std - std}{\max\_std - \min\_std} & otherwise \end{cases}$$

$$condifence\ score = \sqrt{confidence\_time\_gap * confidence\_fluctuation},$$

where time_gap stands for the duration since the last playback in local storage and min_time_gap and max_time_gap are two parameters, std stands for the standard deviation of all bandwidths in local storage, and min_std and max_std are two parameters. The above process observes that when the time gap or variation grows larger, the client side information becomes more inaccurate while the server side information is independent of the time gap and variance in the client side information. In the above, the value for confidence_time_gap is 1 when the time gap value for time_gap is below the threshold min_time_gap. The value for confidence_time_gap is 0 when the time gap value for time_gap is above the threshold max_time_gap. This provides a low confidence when the time gap is large and a high confidence when the time gap is small. The value for confidence_time_gap is determined by the formula that is influenced by the time gap time_gap otherwise, where a higher time gap leads to a lower confidence score for confidence_time_gap. The value for the variance confidence score confidence_fluctuation is 1 when the variance value for std is below the threshold min_std. The value for confidence_fluctuation is 0 when the std value for std is above the threshold max_std. This provides a low confidence when the variance is large and a high confidence when the variance is small. The value for confidence_fluctuation is determined by the formula that is influenced by the variance std otherwise, where a higher variance leads to a lower confidence score for confidence_std. Therefore, the confidence score is measured based on the time gap confidence confidence_time_gap and the variance confidence confidence_fluctuation. The values of the four parameters in the above processes depend on the accuracy and stability of the client side information. In some embodiments, the minimum time gap may be set to four days, the maximum time gap set to eight days, the minimum variance set to 40 Mbps and the maximum variance set to 90 Mbps.

At 610, adaptive bitrate algorithm 114 adjusts the client side start bitrate using the confidence score. For example, the target start bitrate that was calculated at 608 may be multiplied by the confidence score. Other methods of adjusting the client side start bitrate may also be appreciated.

At 612, adaptive bitrate algorithm 114 combines information for the server-side start bitrate and the client side start bitrate. Using the confidence score, adaptive bitrate algorithm 114 can refine the target start bitrate from the server side information with the target start bitrate from the client side information. This may generate the final target start bitrate. In some embodiments, adaptive bitrate algorithm 114 may use the following, but other methods of combining the server side information and the client side information may be used:

$$target\ start\ bitrate = cs * tsbl + (1 - cs) * tsbh.$$

With the confidence score (cs), the target start bitrate from the health_factor (tsbh) can be refined with the target start bitrate from the client side information (tsbl) to generate the final target start bitrate. In some examples, using session 1, where the health_factor is 0.1. If the safe_factor is set to 10, the target start bitrate (tsbh) will be 1 Mbps. If adaptive bitrate algorithm 114 uses the local storage to determine a start bitrate (tsbl) with 2 Mbps, and the confidence score is 0.1, as a result, the final target start bitrate will be 1.1 Mbps. If the local storage is more trustable - perhaps due to stable observations among multiple historical local storage or a small time gap since the last watch - the confidence score will be larger than 0.1 and then the final target start bitrate will be closer to 2 Mbps. The refinement using local storage is that a larger confidence score should lead to final value being closer to the local storage bitrate tsbl. Various methods that achieve the principle can be used. An alternative approach could be setting final target start bitrate equal to tsbl if cs > 0.5, otherwise equal to tsbh.

Then, at 614, adaptive bitrate algorithm 114 selects a profile according to the start bitrate. The start bitrate may be from just the server side information or may be the combined start bitrate from using the server side information and the client side information.

At 616, adaptive bitrate algorithm 114 starts playback with the selected profile. For example, adaptive bitrate algorithm 114 may select a profile and request the profile for the first segment.

The following describes an example using the target start bitrate.

<u>Example</u>

Generally, a higher start bitrate provides a higher video quality because a higher profile will be requested for the first segment. However, this introduces risks of a longer startup time. Client devices that are predicted to experience good network conditions may be less likely to encounter longer startup times when starting with a higher quality profile compared to users that experience poor network conditions. The above process using the server side information and the client side information may predict the network conditions and provide client devices with information that can be used to determine the initial configuration.

In the following example, there may be three client devices that respectively experience poor network conditions, fair network conditions, and good network conditions. The poor network conditions are worse than the fair network conditions, and the poor and fair network conditions are worse than the good network conditions. The expected video startup times increase relative to increasing the start bitrates. Client devices 104 are requesting a video that has four profiles, so there are four options for the start bitrate. The following table 6 shows the expected video startup time for the different start bitrates.

Table 6

|  | Start bitrate = 0.5 Mbps | Start bitrate = 1 Mbps | Start bitrate = 5 Mbps | Start bitrate = 10 Mbps |
|---|---|---|---|---|
| Client A - Poor | 5 seconds | 10 seconds | 15 seconds | 20 seconds |
| Client B - Fair | 4 seconds | 5.5 seconds | 8 seconds | 10 seconds |
| Client C - Good | 3 seconds | 3.5 seconds | 4 seconds | 5 seconds |

In the above, the video start up times may be lower with better network conditions, such as client C has lower video start up times compared to client A and client B.

The following describes using different processes to select the start bitrate. If a fixed start bitrate is used, all client devices will start with the same start bitrate. The following table 7 shows two metrics of the average video startup time and the average start bitrate under different settings of the fixed start bitrate. For example, the fixed start bitrate may be set to 0.5 Mbps, 1 Mbps and 5 Mbps. Table 7 represents the trade off between video start up time and the average start bitrate.

Table 7

|  | Start bitrate = 0.5 Mbps | Start bitrate = 1 Mbps | Start bitrate = 5 Mbps |
|---|---|---|---|
| Average VST | 4 seconds | 6.3 seconds | 9.0 seconds |
| Average start bitrate | 0.5 Mbps | 1 Mbps | 5 Mbps |

In table 7, as the start bitrate increases from 0.5 Mbps to 5 Mbps, the average video startup time increases from 4 seconds (s) to 6.3 seconds to 9 seconds. Also, the average start bitrate increases from 0.5 Mbps to 1 Mbps to 5 Mbps. Thus, as the start bitrate increases, the average video startup time is higher.

In another process, the start bitrate may be selected by the health factor. Table 8 shows a prediction of the health factors for three client devices:

Table 8

| Client 1 | Client 2 | Client 3 |
|---|---|---|
| 0.1 | 0.5 | 0.9 |

Client 1 has a health factor of 0.1, client 2 has a health factor of 0.5, client 3 has a health factor of 0.9. The higher the health factor value, the better the network conditions that are predicted to be experienced.

Adaptive bitrate algorithm 114 calculates the target start bitrate for each client device under the different settings for the safe factor. Table 9 shows the different target start bitrates for the client devices:

Table 9

|  | Client 1 | Client 2 | Client 3 |
|---|---|---|---|
| safe factor=5 | 0.5 Mbps | 2.5 Mbps | 4.5 Mbps |
| safe factor=10 | 1.0 Mbps | 5.0 Mbps | 9.0 Mbps |
| safe factor=15 | 1.5 Mbps | 7.5 Mbps | 13.5 Mbps |

In Table 9, client 3 has higher target start bitrates compared to the client 1 and client 2, due to having a higher health factor.

Then, adaptive bitrate algorithm 114 can select the start bitrate from the four options in the profiles according to the start bitrate. In some embodiments, adaptive bitrate algorithm 114 may select the highest start bitrate that is under the target start bitrate. Table 10 shows the start bitrate for the selected profiles:

Table 10

|  | Client 1 | Client 2 | Client 3 |
|---|---|---|---|
| safe factor=2 | 0.5 Mbps | 1 Mbps | 1 Mbps |
| safe factor=10 | 1 Mbps | 5 Mbps | 5 Mbps |

(continued)

|  | Client 1 | Client 2 | Client 3 |
|---|---|---|---|
| safe factor=15 | 1 Mbps | 5 Mbps | 10 Mbps |

In Table 10, if the target start bitrate is 1.5 Mbps, the profile has the largest bitrate under the target may be 1 Mbps so that profile is selected. Also, if the target start bitrate is 7.5 Mbps or 13.5 Mbps, then the profile with the 5 Mbps is selected for the 7.5 Mbps target start bitrate. The profile with the 10 Mbps is selected for the target start bitrate of 13.5 Mbps.

The trade off between the video start time and the average bitrate may also be calculated. Using different values of the safe factor, the average video startup time and the average start bitrate may be calculated and is shown in table 11:

Table 11

|  | safe factor=2 | safe factor=10 | safe factor=15 |
|---|---|---|---|
| Average VST | 4.7 s | 7.3 s | 7.7 s |
| Average start bitrate | 0.8 Mbps | 3.7 Mbps | 5.3Mbps |

Using the trade-offs, the use of the health factor may provide an average bitrate that is higher with the same video startup time as using the first algorithm with the fixed target start bitrate.

Conclusion

The use of the server side information provides many advantages. For example, using a fixed target start bitrate may not take advantage of varying network conditions. The use of the server side information may provide global session specific configurations to set the initial configuration based on the network conditions being experienced by multiple client devices. This may enable playback sessions with good network conditions to have a higher quality playback and prevent playback sessions with poor network conditions from experiencing rebuffers or long video startup times. Also, the process may combine the client side information with the server side information to use or to determine a more accurate and stable prediction of the network condition that is specific to the client device that requested the essence of content.

System

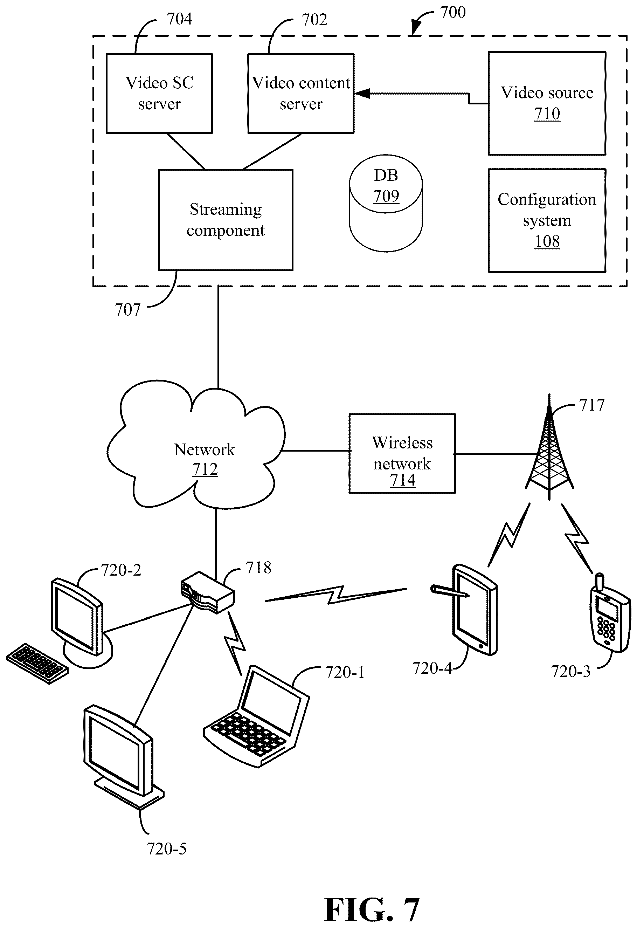

Features and aspects as disclosed herein may be implemented in conjunction with a video streaming system 700 in communication with multiple client devices via one or more communication networks as shown in FIG. 7. Aspects of the video streaming system 700 are described merely to provide an example of an application for enabling distribution and delivery of content prepared according to the present disclosure. It should be appreciated that the present technology is not limited to streaming video applications and may be adapted for other applications and delivery mechanisms.

In one embodiment, a media program provider may include a library of media programs. For example, the media programs may be aggregated and provided through a site (e.g., website), application, or browser. A user can access the media program provider's site or application and request media programs. The user may be limited to requesting only media programs offered by the media program provider.

In system 700, video data may be obtained from one or more sources for example, from a video source 710, for use as input to a video content server 702. The input video data may comprise raw or edited frame-based video data in any suitable digital format, for example, Moving Pictures Experts Group (MPEG)-1, MPEG-2, MPEG-4, VC-1, H.264 / Advanced Video Coding (AVC), High Efficiency Video Coding (HEVC), or other format. In an alternative, a video may be provided in a non-digital format and converted to digital format using a scanner or transcoder. The input video data may comprise video clips or programs of various types, for example, television episodes, motion pictures, and other content produced as primary content of interest to consumers. The video data may also include audio or only audio may be used.

The video streaming system 700 may include one or more computer servers or modules 702, 704, and 707 distributed over one or more computers. Each server 702, 704, 707 may include, or may be operatively coupled to, one or more data stores 709, for example databases, indexes, files, or other data structures. A video content server 702 may access a data store (not shown) of various video segments. The video content server 702 may serve the video segments as directed by a user interface controller communicating with a client device. As used herein, a video segment refers to a definite portion of frame-based video data, such as may be used in a streaming video session to view a television episode, motion picture, recorded live performance, or other video content.

In some embodiments, a video supplemental content (SC) server 704 may access a data store of relatively short videos (e.g., 10 second, 30 second, or 60 second supplemental content) configured as advertising for a particular advertiser or message. The supplemental content may be provided for an entity in exchange for payment of some kind or may comprise a promotional message for the system 700, a public service message, or some other information. The video supplemental content server 704 may serve the supplemental content segments as directed by a user interface controller (not shown).

The video streaming system 700 also may include configuration system 108.

The video streaming system 700 may further include an integration and streaming component 707 that integrates video content and supplemental content into a streaming video segment. For example, streaming component 707 may be a content server or streaming media server. A controller (not shown) may determine the selection or configuration of supplemental content in the streaming video based on any suitable algorithm or process. The video streaming system 700 may include other modules or units not depicted in FIG. 7, for example, administrative servers, commerce servers, network infrastructure, supplemental content selection engines, and so forth.

The video streaming system 700 may connect to a data communication network 712. A data communication network 712 may comprise a local area network (LAN), a wide area network (WAN), for example, the Internet, a telephone network, a wireless network 714 (e.g., a wireless cellular telecommunications network (WCS)), or some combination of these or similar networks.

One or more client devices 720 may be in communication with the video streaming system 700, via the data communication network 712, wireless network 714, or another network. Such client devices may include, for example, one or more laptop computers 720-1, desktop computers 720-2, "smart" mobile phones 720-3, tablet devices 720-4, network-enabled televisions 720-5, or combinations thereof, via a router 718 for a LAN, via a base station 717 for wireless network 714, or via some other connection. In operation, such client devices 720 may send and receive data or instructions to the system 700, in response to user input received from user input devices or other input. In response, the system 700 may serve video segments and metadata from the data store 709 responsive to selection of media programs to the client devices 720. Client devices 720 may output the video content from the streaming video segment in a media player using a display screen, projector, or other video output device, and receive user input for interacting with the video content.

Distribution of audio-video data may be implemented from streaming component 707 to remote client devices over computer networks, telecommunications networks, and combinations of such networks, using various methods, for example streaming. In streaming, a content server streams audio-video data continuously to a media player component operating at least partly on the client device, which may play the audio-video data concurrently with receiving the streaming data from the server. Although streaming is discussed, other methods of delivery may be used. The media player component may initiate play of the video data immediately after receiving an initial portion of the data from the content provider. Traditional streaming techniques use a single provider delivering a stream of data to a set of end users. High bandwidth and processing power may be required to deliver a single stream to a large audience, and the required bandwidth of the provider may increase as the number of end users increases.

Streaming media can be delivered on-demand or live. Streaming enables immediate playback at any point within the file. End-users may skip through the media file to start playback or change playback to any point in the media file. Hence, the end-user does not need to wait for the file to progressively download. Typically, streaming media is delivered from a few dedicated servers having high bandwidth capabilities via a specialized device that accepts requests for video files, and with information about the format, bandwidth, and structure of those files, delivers just the amount of data necessary to play the video, at the rate needed to play it. Streaming media servers may also account for the transmission bandwidth and capabilities of the media player on the destination client. Streaming component 707 may communicate with client device 720 using control messages and data messages to adjust to changing network conditions as the video is played. These control messages can include commands for enabling control functions such as fast forward, fast reverse, pausing, or seeking to a particular part of the file at the client.

Since streaming component 707 transmits video data only as needed and at the rate that is needed, precise control over the number of streams served can be maintained. The viewer will not be able to view high data rate videos over a lower data rate transmission medium. However, streaming media servers (1) provide users random access to the video file, (2) allow monitoring of who is viewing what video programs and how long they are watched (3) use transmission bandwidth more efficiently, since only the amount of data required to support the viewing experience is transmitted, and (4) the video file is not stored in the viewer's computer, but discarded by the media player, thus allowing more control over the content.

Streaming component 707 may use TCP-based protocols, such as HyperText Transfer Protocol (HTTP) and Real Time Messaging Protocol (RTMP). Streaming component 707 can also deliver live webcasts and can multicast, which allows more than one client to tune into a single stream, thus saving bandwidth. Streaming media players may not rely on buffering the whole video to provide random access to any point in the media program. Instead, this is accomplished using control messages transmitted from the media player to the streaming media server. Other protocols used for streaming are HTTP live streaming (HLS) or Dynamic Adaptive Streaming over HTTP (DASH). The HLS and DASH protocols deliver video over HTTP via a playlist of small segments that are made available in a variety of bitrates typically from one or more content delivery networks (CDNs). This allows a media player to switch both bitrates and content sources on a segment-by-segment basis. The switching helps compensate for network bandwidth variances and infrastructure failures that may occur during playback of the video.

The delivery of video content by streaming may be accomplished under a variety of models. In one model, the user pays for the viewing of video programs, for example, paying a fee for access to the library of media programs or a portion of restricted media programs, or using a pay-per-view service. In another model widely adopted by broadcast television shortly after its inception, sponsors pay for the presentation of the media program in exchange for the right to present supplemental content during or adjacent to the presentation of the program. In some models, supplemental content is inserted at predetermined times in a video program, which times may be referred to as "slots" or "breaks." With streaming video, the media player may be configured so that the client device cannot play the video without also playing predetermined supplemental content during the designated slots.

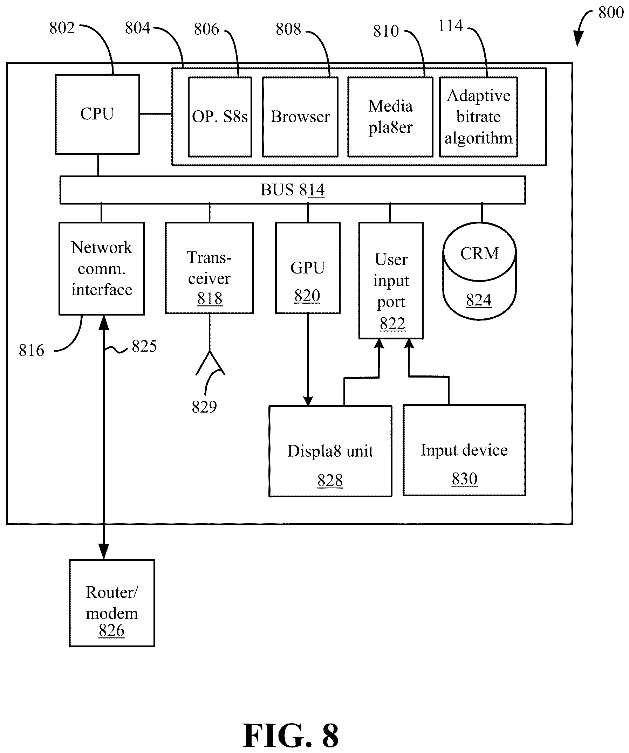

Referring to FIG. 8, a diagrammatic view of an apparatus 800 for viewing video content and supplemental content is illustrated. In selected embodiments, the apparatus 800 may include a processor (CPU) 802 operatively coupled to a processor memory 804, which holds binary-coded functional modules for execution by the processor 802. Such functional modules may include an operating system 806 for handling system functions such as input/output and memory access, a browser 808 to display web pages, and media player 810 for playing video. The modules may further include adaptive bitrate algorithm 114. The memory 804 may hold additional modules not shown in FIG. 8, for example modules for performing other operations described elsewhere herein.

A bus 814 or other communication components may support communication of information within the apparatus 800. The processor 802 may be a specialized or dedicated microprocessor configured or operable to perform particular tasks in accordance with the features and aspects disclosed herein by executing machine-readable software code defining the particular tasks. Processor memory 804 (e.g., random access memory (RAM) or other dynamic storage device) may be connected to the bus 814 or directly to the processor 802, and store information and instructions to be executed by a processor 802. The memory 804 may also store temporary variables or other intermediate information during execution of such instructions.

A computer-readable medium in a storage device 824 may be connected to the bus 814 and store static information and instructions for the processor 802; for example, the storage device (CRM) 824 may store the modules for operating system 806, browser 808, and media player 810 when the apparatus 800 is powered off, from which the modules may be loaded into the processor memory 804 when the apparatus 800 is powered up. The storage device 824 may include a non-transitory computer-readable storage medium holding information, instructions, or some combination thereof, for example instructions that when executed by the processor 802, cause the apparatus 800 to be configured or operable to perform one or more operations of a method as described herein.

A network communication (comm.) interface 816 may also be connected to the bus 814. The network communication interface 816 may provide or support two-way data communication between the apparatus 800 and one or more external devices, e.g., the streaming system 700, optionally via a router/modem 826 and a wired or wireless connection 825. In the alternative, or in addition, the apparatus 800 may include a transceiver 818 connected to an antenna 829, through which the apparatus 800 may communicate wirelessly with a base station for a wireless communication system or with the router/modem 826. In the alternative, the apparatus 800 may communicate with a video streaming system 700 via a local area network, virtual private network, or other network. In another alternative, the apparatus 800 may be incorporated as a module or component of the system 700 and communicate with other components via the bus 814 or by some other modality.

The apparatus 800 may be connected (e.g., via the bus 814 and graphics processing unit 820) to a display unit 828. A display 828 may include any suitable configuration for displaying information to an operator of the apparatus 800. For example, a display 828 may include or utilize a liquid crystal display (LCD), touchscreen LCD (e.g., capacitive display), light emitting diode (LED) display, projector, or other display device to present information to a user of the apparatus 800 in a visual display.

One or more input devices 830 (e.g., an alphanumeric keyboard, microphone, keypad, remote controller, game controller, camera, or camera array) may be connected to the bus 814 via a user input port 822 to communicate information and commands to the apparatus 800. In selected embodiments, an input device 830 may provide or support control over the positioning of a cursor. Such a cursor control device, also called a pointing device, may be configured as a mouse, a trackball, a track pad, touch screen, cursor direction keys or other device for receiving or tracking physical movement and translating the movement into electrical signals indicating cursor movement. The cursor control device may be incorporated into the display unit 828, for example using a touch sensitive screen. A cursor control device may communicate direction information and command selections to the processor 802 and control cursor movement on the display 828. A cursor control device may have two or more degrees of freedom, for example allowing the device to specify cursor positions in a plane or three-dimensional space.

Some embodiments may be implemented in a non-transitory computer-readable storage medium for use by or in connection with the instruction execution system, apparatus, system, or machine. The computer-readable storage medium contains instructions for controlling a computer system to perform a method described by some embodiments. The computer system may include one or more computing devices. The instructions, when executed by one or more computer processors, may be configured or operable to perform that which is described in some embodiments.

As used in the description herein and throughout the claims that follow, "a", "an", and "the" includes plural references unless the context clearly dictates otherwise. Also, as used in the description herein and throughout the claims that follow, the meaning of "in" includes "in" and "on" unless the context clearly dictates otherwise.

The above description illustrates various embodiments along with examples of how aspects of some embodiments may be implemented. The above examples and embodiments should not be deemed to be the only embodiments and are presented to illustrate the flexibility and advantages of some embodiments as defined by the following claims. Based on the above disclosure and the following claims, other arrangements, embodiments, implementations, and equivalents may be employed without departing from the scope hereof as defined by the claims.

**Claims**

1. A method comprising:

   receiving server side information for a request for playback of an instance of content, wherein the server side information is determined based on features that are based on historical playback of content by a plurality of client devices;
   mapping the server side information to a configuration for an adaptive bitrate algorithm;
   determining, by the adaptive bitrate algorithm, a profile from a plurality of profiles based on the configuration, wherein the configuration is compared to bitrates of profiles in the plurality of profiles to select the profile; and
   sending a request for a segment of the instance of content using the profile.

2. The method of claim 1, further comprising:
   determining whether to use client side information, wherein client side information is based on historical playback of content from a client device that requested the playback of the instance of content.

3. The method of claim 2, wherein determining whether to use client side information comprises:
   determining if the client device has local storage of the historical playback of content at the client device.

4. The method of claim 2 or 3, wherein the configuration comprises a first bitrate, the method further comprising:
   when using the client side information, mapping the client side information to a second bitrate, wherein the first bitrate and the second bitrate are used to determine the profile.

5. The method of claim 4, further comprising:

   calculating a confidence score; and
   adjusting the second bitrate based on the confidence score to generate an adjusted second bitrate, wherein the first bitrate and the adjusted second bitrate are used to determine the profile.

6. The method of claim 5, wherein the confidence score is based on a time gap of a playback of content in the historical playback of content; and/or
   wherein the confidence score is based on a variance of multiple playbacks of content in the historical playback of content, wherein preferably the variance is based on bandwidth experienced in the multiple playbacks.

7. The method of claim 5, wherein:

   a time gap confidence score is based on a time gap of a playback of content in the historical playback of content,
   a variance confidence score is based on a variance of multiple playbacks of content in the historical playback of content, and
   the confidence score is based on combining the time gap confidence score and the variance confidence score.

8. The method of any one of the preceding claims, further comprising:
   sending a request for playback of the instance of content, wherein the server side information is received in response to the request.

9. The method of any one of the preceding claims, wherein mapping the server side information to the configuration comprises:

   mapping a value of the server side information to a bitrate using a linear mapping; and/or
   combining the server side information with a safe factor to determine a bitrate, wherein the safe factor is used to vary a conservativeness of selecting the bitrate.

10. The method of any one of the preceding claims, wherein:
    the server side information is generated using a prediction network that is trained based on features from the historical playback of content by the plurality of client devices.

11. The method of any one of the preceding claims, wherein:

    the configuration comprises a bitrate, and
    the adaptive bitrate algorithm compares the bitrate to the bitrates of profiles in the plurality of profiles to select the profile; and/or
    wherein:

       the configuration comprises a safe factor that is used to adjust a bitrate in the configuration, or
       the configuration comprises a target buffer level for maintaining data from the instance of content during the playback of the instance of content.

12. A non-transitory computer-readable storage medium having stored thereon computer executable instructions, which when executed by a computing device, cause the computing device to be operable for:

    receiving server side information for a request for playback of an instance of content, wherein the server side information is determined based on features that are based on historical playback of content by a plurality of client devices;
    mapping the server side information to a configuration for an adaptive bitrate algorithm;
    determining, by the adaptive bitrate algorithm, a profile from a plurality of profiles based on the configuration, wherein the configuration is compared to bitrates of profiles in the plurality of profiles to select the profile; and
    sending a request for a segment of the instance of content using the profile.

13. A method comprising:

    training a prediction network to map features from historical playback of content by a plurality of client devices to server side information;
    determining a training dataset from the features from historical playback of content;
    generating labels for the features;
    using the features and the labels to adjust parameters of the prediction network;
    receiving a request for playback of an instance of content from a client device;
    determining features for the request, wherein the features are based on historical playback of content;
    analyzing the features to map the features to server side information; and
    sending the server side information to the client device, wherein the client device uses the server side information to select a bitrate that is used to select a profile in a plurality of profiles for requesting a segment of the instance of content.

14. The method of claim 13, wherein generating the labels comprises:
    determining a value for the label based on bandwidth that is experienced in the historical playback of content.

15. The method of claim 13 or 14, further comprising:

    determining whether a rebuffer value meets a threshold; and
    when the rebuffer value meets the threshold, adjusting the value of the label based on an adjustment value; and/or
    further comprising:

       determining whether a startup time value meets a threshold, wherein the startup time value is based on an amount of time content takes to start playback; and

when the start up time value meets the threshold, adjusting the value of the label based on an adjustment value.

FIG. 1

200

Bitrate Selection Method

Leverage server side or client side information? —202

No

Determine a profile based on first logic —204

Output the profile based on first logic —205

Yes

Determine server side information or client side information from storage —206

Determine initial configuration using second logic based on the server side information or client side information —208

Output the initial configuration with the initial start bitrate —210

**FIG. 2**

Configuration
System
108

Features for a
request →

Prediction network
302

→ Server side
information

**FIG. 3**

400

Training Method

Collect training data set — 402

Compute labels for features — 404

Input features from training data set into the prediction network — 406

Output the health factor as the server side information — 408

Analyze the output and a label for the features to adjust parameters of the prediction network — 410

# FIG. 4

500

```
     ┌──────────────────────────────┐
     │       Server Side Method      │
     └──────────────────────────────┘
                    │
                    ▼
  ┌──────────────────────────────────┐  502
  │ Receive request for instance of   │
  │ content for playback              │
  └──────────────────────────────────┘
                    │
                    ▼
  ┌──────────────────────────────────┐  504
  │ Determine features for the request│
  └──────────────────────────────────┘
                    │
                    ▼
  ┌──────────────────────────────────┐  506
  │ Input the features into the       │
  │ prediction network to determine   │
  │ the server side information        │
  └──────────────────────────────────┘
                    │
                    ▼
  ┌──────────────────────────────────┐  508
  │ Send the server side information   │
  │ to the client device              │
  └──────────────────────────────────┘
```

# FIG. 5

600

## Client Side Method

Map the server side information to a
server side start bitrate — 602

Use client side information? — 604

Yes

Map client side information to client side
start bitrate — 606

Calculate confidence score — 608

Calculate client side start bitrate using the
confidence score — 610

Combine information for the server side
start bitrate and the client side start bitrate — 612

No

Select profile according to the start bitrate — 614

Start playback with the selected profile — 616

## FIG. 6

**FIG. 7**

FIG. 8

Europäisches
Patentamt

European
Patent Office

Office européen
des brevets

# EUROPEAN SEARCH REPORT

**Application Number**

EP 25 22 1335

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/141513 A1 (DAI TONGYU [CN] ET AL) 5 May 2022 (2022-05-05) | 1-4,8, 10-15 | INV. H04N21/2343 |
| Y | * paragraph [0022] - paragraph [0030] * * paragraph [0042] - paragraph [0053] * * paragraph [0066] - paragraph [0072] * * figures 1-12 * | 5-7,9 | H04N21/25 H04N21/845 |
| Y | US 2024/205473 A1 (TIAN CHENYU [CN] ET AL) 20 June 2024 (2024-06-20) * paragraph [0044] - paragraph [0046] * | 5-7 | |
| Y | EP 4 171 037 A1 (HULU LLC [US]) 26 April 2023 (2023-04-26) * paragraph [0035] * | 9 | |
| A | US 2017/308927 A1 (WOODS MICHAEL [US] ET AL) 26 October 2017 (2017-10-26) * paragraph [0023] * | 7 | |

|  |
|---|
| **TECHNICAL FIELDS SEARCHED (IPC)** |
| H04N |

The present search report has been drawn up for all claims

| Place of search | Date of completion of the search | Examiner |
|---|---|---|
| The Hague | 26 February 2026 | Arpaci, Mutlu |

EPO FORM 1503 03.82 (P04C01)

## ANNEX TO THE EUROPEAN SEARCH REPORT
## ON EUROPEAN PATENT APPLICATION NO.

EP 25 22 1335

This annex lists the patent family members relating to the patent documents cited in the above-mentioned European search report.
The members are as contained in the European Patent Office EDP file on
The European Patent Office is in no way liable for these particulars which are merely given for the purpose of information.

26-02-2026

| Patent document cited in search report | | Publication date | Patent family member(s) | | Publication date |
|---|---|---|---|---|---|
| US 2022141513 | A1 | 05-05-2022 | CN | 114449353 A | 06-05-2022 |
| | | | EP | 3993365 A1 | 04-05-2022 |
| | | | JP | 7626399 B2 | 07-02-2025 |
| | | | JP | 2022074119 A | 17-05-2022 |
| | | | JP | 2023175841 A | 12-12-2023 |
| | | | KR | 20220059425 A | 10-05-2022 |
| | | | US | 2022141513 A1 | 05-05-2022 |
| US 2024205473 | A1 | 20-06-2024 | CN | 118233662 A | 21-06-2024 |
| | | | US | 2024205473 A1 | 20-06-2024 |
| EP 4171037 | A1 | 26-04-2023 | CN | 116017037 A | 25-04-2023 |
| | | | EP | 4171037 A1 | 26-04-2023 |
| | | | JP | 7494265 B2 | 03-06-2024 |
| | | | JP | 2023063238 A | 09-05-2023 |
| | | | US | 11616993 B1 | 28-03-2023 |
| US 2017308927 | A1 | 26-10-2017 | NONE | | |

EPO FORM P0459

For more details about this annex : see Official Journal of the European Patent Office, No. 12/82

**EP 4 783 589 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 43592524